(19) Europäisches Patentamt
European Patent Office
Office européen des brevets

(11) **EP 1 340 723 B1**

(12) **EUROPÄISCHE PATENTSCHRIFT**

(45) Veröffentlichungstag und Bekanntmachung des Hinweises auf die Patenterteilung:
**11.08.2010 Patentblatt 2010/32**

(51) Int Cl.:
**C03B 19/14** (2006.01)     **C03C 3/06** (2006.01)

(21) Anmeldenummer: **03004655.1**

(22) Anmeldetag: **03.03.2003**

(54) **Verfahren zu Herstellung von Quarzglas und einer Quarzglasvorform**

Quartz glass preform and process for manufacture of quartz glass and of a quartz glass preform

Procédé de la fabrication du verre de silice et d'une préforme en verre de silice

(84) Benannte Vertragsstaaten:
**AT BE BG CH CY CZ DE DK EE ES FI FR GB GR HU IE IT LI LU MC NL PT RO SE SI SK TR**

(30) Priorität: **01.03.2002 DE 10208821**

(43) Veröffentlichungstag der Anmeldung:
**03.09.2003 Patentblatt 2003/36**

(73) Patentinhaber: **Schott AG**
**55122 Mainz (DE)**

(72) Erfinder:
• **Natura, Ute, Dr.**
**07747 Jena (DE)**
• **Menzel, Andreas**
**07745 Jena (DE)**
• **Alkemper, Jochen, Dr.**
**55270 Klein-Winternheim (DE)**
• **Martin, Rolf**
**07743 Jena (DE)**
• **von der Gönna, Gordon, Dr.**
**07749 Jena (DE)**
• **Schmidt, Matthias**
**07749 Jena (DE)**
• **Coriand, Frank**
**07745 Jena (DE)**
• **Schmiady, Thomas**
**07749 Jena (DE)**
• **Sohr, Oliver, Dr.**
**55131 Mainz (DE)**
• **Voitsch, Andreas**
**07745 Jena (DE)**

(74) Vertreter: **Fuchs**
**Patentanwälte**
**Postfach 46 60**
**65036 Wiesbaden (DE)**

(56) Entgegenhaltungen:
EP-A- 0 835 848     EP-A- 0 870 737
EP-A- 0 964 832     EP-A- 1 067 096
DE-A- 4 203 287     US-A- 5 908 482

• PATENT ABSTRACTS OF JAPAN Bd. 1998, Nr. 11, 30. September 1998 (1998-09-30) & JP 10 152330 A (NIPPON SEKIEI GLASS KK; YAMAGUCHI NIPPON SEKIEI KK), 9. Juni 1998 (1998-06-09)
• PATENT ABSTRACTS OF JAPAN Bd. 1995, Nr. 06, 31. Juli 1995 (1995-07-31) & JP 7 061823 A (NIKON CORP), 7. März 1995 (1995-03-07)

## Beschreibung

Die Erfindung betrifft ein Verfahren zur Herstellung von synthetischem Quarzglas für DUV-Laseranwendungen nach dem Oberbegriff des Patentanspruchs 1.

In den vergangenen Jahren bestand der zunehmende Trend, integrierte Schaltkreise mit immer kleineren Strukturen auszustatten. Hierzu ist es erforderlich, feine Muster von integrierten Schaltungen auf Wafer abzubilden, was durch Belichtungsanlagen, so genannte Stepper, vorgenommen wird.

Entsprechend ist es erforderlich, für die Projektionslinsen eines Steppers die Auflösung und die Tiefenschärfe zunehmend zu verbessern. Die Auflösung und die Tiefenschärfe lassen sich durch die beiden folgenden Gleichungen angeben:

$$\text{Auflösung} = a1 \times \frac{\lambda}{N.A.}$$

$$\text{Tiefenschärfe} = a2 \times \frac{\lambda}{N.A.^2}$$

wobei a1 und a2 Proportionalitätskonstanten sind, $\lambda$ die für die Belichtung verwendete Wellenlänge ist, und N.A. die numerische Apertur steht.

Um somit die Auflösung als auch die Tiefenschärfe zu erhöhen bietet es sich an, die Wellenlänge zunehmend kleiner zu wählen, so dass nunmehr auch KrF-Excimerlaser mit einer Wellenlänge von $\lambda$ = 248 nm und ArF-Excimerlaser mit einer Wellenlänge von $\lambda$ = 193 nm Einsatz finden.

Da sich im Strahlengang eines Steppers eine beachtliche Anzahl optischer Elemente befindet, besteht das Bedürfnis, diese mit einer guten Transmission auszustatten. Gleichzeitig müssen die optischen Elemente über ihren Querschnitt einen möglichst gleichmäßigen Brechungsindex und eine möglichst geringe Doppelbrechung aufweisen, um eine exakte Abbildung der Maskenstrukturen auf dem Waver sicherzustellen.

Zur Herstellung derartiger optischer Elemente ist das Flammenhydrolyse-Verfahren bekannt. So offenbart die DE 42 03 287 A1 ein Flammenhydrolyse-Verfahren, bei der der Abstand zwischen der Vorform und dem Brenner konstant gehalten wird, um den Aufbau von Schichtungen im Quarzglas zu verhindern. Bei der Synthese des Quarzglases wird eine Brennerflamme auf eine auf einem Tragkörper befindliche Ablagerungsfläche gerichtet, die gleichzeitig die Frontfläche der optischen Vorform ist. Die Brennerflamme enthält Si-haltiges Material, Sauerstoff sowie als Trägergas Wasserstoff. Bei den hohen Temperaturen der Brennerflamme wird das Si-haltige Material umgesetzt und scheidet sich als $SiO_2$ auf der Ablagerungsfläche ab. Im Laufe des Verfahrens wächst dann sukzessive ein rotationssymmetrischer Zylinder aus $SiO_2$ auf und kann zur Herstellung eines entsprechenden optischen Elementes herangezogen werden.

Die EP 09 648 32 B1 lehrt ein Verfahren zur Herstellung eines synthetischen Quarzglases, das höchsten Ansprüchen bezüglich der Widerstandsfähigkeit gegenüber Excimerlaserstrahlung im DUV-Bereich genügen soll. Hierbei wird das Quarzglas mit einem OH-Gehalt $\geq$ 1150 ppm, einer Spannungsdoppelbrechung $\leq$ 5 nm/cm, einem $H_2$-Gehalt $\geq$ 1 x $10^{18}$ Moleküle pro $cm^3$ und einem Cl-Gehalt $\leq$ 20 ppm ausgestattet. Hierdurch soll unter definierten DUV-Strahlungsbedingungen die Widerstandsfähigkeit besonders hoch ausfallen, was sich durch eine nur geringe Transmissionsverringerung von $\Delta T \leq 0,1$ % pro cm Dicke ausdrückt.

Die EP 07 350 06 A1 lehrt die Herstellung eines Quarzglases mit dem Flammenhydrolyse-Verfahren, welches so ausgestaltet ist, dass Schlieren im wesentlichen senkrecht zur Aufwachsrichtung des Quarzglases entstehen. Durch ein geeignetes Herausschneiden des optischen Elementes aus der Vorform wird sichergestellt, dass das Element Schlieren aufweist, die im wesentlichen parallel zueinander sind und die planar sind. Durch diese Vorgehensweise soll die Verschlechterung der optischen Eigenschaften durch die Schlieren minimiert werden.

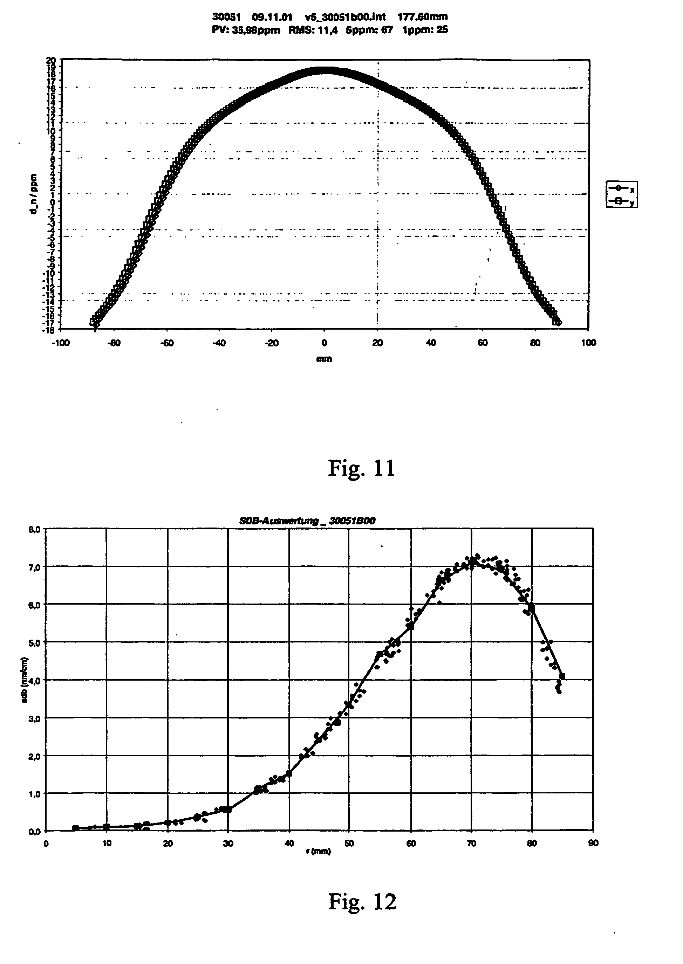

Die EP 0720970 A1 lehrt die Herstellung eines Quarzglases über das Flammenhydrolyse-Verfahren, bei dem gemäß Figur 11 ein Brenner eingesetzt wird, der mittig mehrere konzentrisch zueinander angeordnete Ringspaltdüsen besitzt. Mit diesem Brenner wird ein Quarzglas synthetisiert, das eine fiktive Temperatur von 1200 K oder weniger und eine OH-Gruppen-Konzentration von mehr als 1000 ppm aufweist.

IN EP-A2-0 835 848 wird ein optisches, fluorhaltiges Quarzglas, ein Herstellungsverfahren dafür sowie Belichtungsapparate, die die optischen Elemente aus diesem Quarzglas enthalten, beschrieben. Gemäß den Aussagen in dieser Schrift ist ein nach dem Flammenhydrolyseverfahren erzeugtes Quarzglas nicht sonderlich UV-stabil, es sei denn, und das ist der Erfindungsgegenstand der EP-A2-0 835 848, man stellt ein fluorhaltiges Quarzglas her. Das in diesem Verfahren anfallende fluorhaltige Abgas ist umweltschädlich und muss daher aufwendig gereinigt werden.

Synthetische Quarzgläser, welche nach dem Flammenhydrolyse-Verfahren oder alternativen Verfahren hergestellt werden, zeigen meist eine sehr ähnliche materielle Zusammensetzung, und auch ähnliche Werte bei messtechnisch relevanten Größen wie Brechzahlhomogenität, Spannungsdoppelbrechung, Schichtengehalt und chemische Reinheit, Gehalt an Blasen und Einschlüssen etc. Obwohl dies zu der Schlussfolgerung führen könnte, dass die bekannten Quarzgläser weitgehend ähnliche optische Eigenschaften haben, zeigt die Praxis, dass sich synthetische Quarzgläser oftmals erheblich hinsichtlich der laserinduzierten Fluoreszenzeigenschaften bzw. dem Transmissionsverhalten bei Laserbestrahlung unterscheiden. Es kommt bei den Quarzgläsern bei Langzeitbestrahlung zu einer unterschiedlich starken Schädigung der Glasmatrix, was sich typischerweise in einer Verschlechterung der Transmissionseigenschaften äußert und vom Fachmann auch als Laserdamage bezeichnet wird. Auch kann eine Kompaktierung des Materials stattfinden und das optische Element dadurch unbrauchbar werden.

Der Erfindung liegt das technische Problem zugrunde, ein Verfahren zur Herstellung eines Quarzglases bereitzustellen, das einerseits während seiner Lebensdauer nicht durch den DUV-Beschuss beschädigt wird und durch eine weitgehende Konstanz der induzierten Absorption bestimmt ist, zum anderen eine hohe Brechzahlhomogenität, eine hohe Spannungsdoppelbrechung, und eine hohe Reintransmission bei gleichzeitiger Schichtenfreiheit in Kombination gewährleistet, und dies zuverlässig und reproduzierbar.

Die Lösung dieses technischen Problems erfolgt durch das in Patentanspruch 1 beschriebene Verfahren, eine vorteilhafte Weiterbildung wird in Anspruch 2 angegeben.

Das oben genannte technische Problem wird erfindungsgemäß gelöst durch die beschriebene Herstellung einer Vorform aus synthetischem Quarzglas, welche geeignet ist zur Beaufschlagung mit DUV-Strahlung im Wellenlängenbereich < 250 nm, im Kernbereich im wesentlichen frei von Schichtungen ist, dessen OH-Gehalt größer als 900 ppm, dessen CI-Gehalt kleiner als 50 ppm, und dessen $H_2$-Gehalt größer als 0,5 x $10^{18}$ Moleküle pro $cm^3$ ist, und die dadurch gekennzeichnet ist, dass die DUV-Widerstandsfähigkeit durch einen relativen $H_2$-Verbrauch gegeben ist, der mit zunehmender Energiedosis in eine Sättigung geht.

Zur Erläuterung dieser technischen Lösung soll das Schädigungsverhalten des Quarzglases bei Langzeitbeaufschlagung mit energiereicher DUV-Strahlung, d. h. mit einer Strahlung mit $\lambda \leq 250$ nm näher erläutert werden.

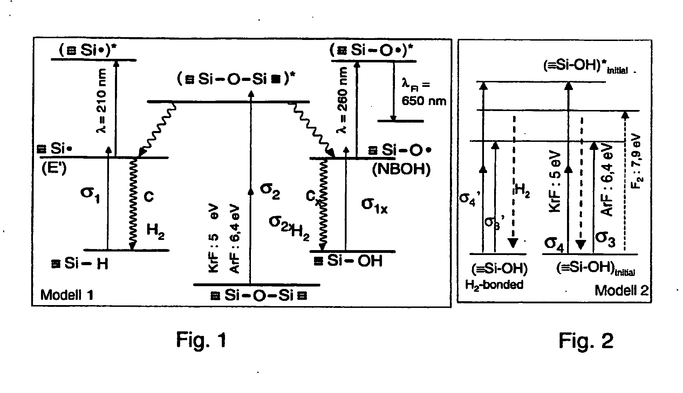

Fig. 1 zeigt ein Schema mit Energieniveaus, wie sie im Quarzglas anzutreffen sind, und die bei Laserbestrahlung in ihrer Population verändert werden

Wird das Quarzglas mittels Laserstrahlung von $\lambda = 248$ nm bzw. einer Photonenenergie von 5 eV oder $\lambda = 193$ nm bzw. einer Photonenenergie von 6,4 eV bestrahlt, so können gemäß Fig. 1 gespannte Si-O-Bindungen über einen 2-Photonenprozess mit einem Wechselwirkungsquerschnitt $\sigma_2$ Energie aufnehmen. Der Energiezustand (Si-O-Si) kann damit in einen angeregten Zustand (Si-O-Si)* überführt werden, siehe Fig. 1 in der Mitte.

Dieser angeregte Zustand zerfällt in einen E'-Zustand und ein NBOH-Zentrum. Das E'-Zentrum weist die Struktur von ($\equiv$ Si •) auf, wobei " $\equiv$ " bedeutet, dass das Silizium an 3 Sauerstoffatome gebunden ist, und wobei "•" ein ungepaartes Elektron zum Ausdruck bringt. NBOH steht für "Non-Bridging-Oxygen-Hole" und hat die Struktur ($\equiv$ Si-O •).

Durch Laserbestrahlung ($\lambda = 193$ nm und $\lambda=248$ nm) ist die Überführung des E'-Zustandes in ein angeregtes Niveau ($\equiv$ Si •)* und des NBOH-Zentrums in das angeregte Niveau ($\equiv$ Si-O •)* möglich. Das Absorptionsmaximum liegt bei der Anregung des E'-Zentrum bei $\lambda = 210$ nm und für das NBOH-Zentrum bei $\lambda = 260$ nm.

Das E'-Zentrum und das NBOH-Zentrum sind Defektzentren, die für eine erhebliche Abnahme der Transmission von Licht im Ultraviolettbereich verantwortlich sind. Aufgrund der Lage der Absorptionsbanden ist das E'-Zentrum maßgebliche Ursache für eine Absorption bei der Bestrahlung mit $\lambda= 193$ nm, das NBOH-Zentrum die maßgebliche Ursache für eine Absorption bei der Bestrahlung mit $\lambda= 248$ nm. Ist nun Wasserstoff im Glas, so werden E'-Zentren zu SiH- und NBOH-Zentren zu SiOH mit Rekombinationsraten c bzw. $c_x$ abgesättigt und tragen im abgesättigten Zustand nicht zur Absorption bei. Dieser Prozess der Absättigung ist von der Energiedichte unabhängig.

Durch Bestrahlung kann aus SiH wieder ein E'-Zentrum werden und aus SiOH wieder ein NBOH-Zentrum. Dieser Vorgang wird bestimmt durch die Einphotonenquerschnitte $\sigma_1$ bzw. $\sigma_{1x}$ Die Rückbildung der Defekte erfolgt durch Absättigung mit Wasserstoff. Es stellt sich während der Bestrahlung ein Gleichgewicht zwischen Bildung und Rückbildung der Defekte ein.

Dieses an sich bekannte Modell liefert einen energiedichteabhängigen Verbrauch an Wasserstoff, der < $10^{17}$ Moleküle pro $cm^3$ ist.

Es wurde nun gefunden, dass es zusätzlich einen zweiten Defektbildungsprozess gibt. Dieser zweite Defektbildungsprozess ist weitgehend unabhängig vom ersten Prozess. Die beiden Prozesse beeinflussen sich gegenseitig nur durch den bei beiden Prozessen stattfindenden Wasserstoffverbrauch. Der zweite Prozess, dessen Ablauf über das Energieniveauschema gemäß Fig. 2 dargestellt ist, besteht darin, dass das anfangs vorhandene SiOH, im Energieniveauschema gemäß Fig. 2 rechts unten mit ($\equiv$ Si-OH)$_{initial}$ bezeichnet, durch Energiezufuhr in einen angeregten Zustand ($\equiv$ Si-OH)*$_{initial}$ überführt werden kann, welcher seinerseits unter $H_2$-Anlagerung zu (Si-OH)$_{H2}$ gebunden führt. Letzgenannter Zustand ist ein $H_2$-angereichertes SiOH.

Die erstmalige Erkenntnis, dass es einen zweiten Defektbildungsmechanismus im Quarzglas bei Bestrahlung mit $\lambda= 248$ nm und $\lambda=193$ nm gibt, ermöglicht es nun, ein Verfahren anzugeben, mit dem ein Quarzglas hergestellt werden kann, bei dem dieser zweite Defektbildungsmechanismus berücksichtigt wird und dessen strahlungsinduzierte Absorption bei Langzeitbestrahlung ein Sättigungsverhalten zeigt, und dies auf einem einstellbar geringen Niveau.

Hierzu ist es erforderlich, über die Einstellung eines geeignet hohen Wasserstoffgehalts dafür Sorge zu tragen, dass der relative Wasserstoffverbrauch bei zunehmender Strahlungsdosis in eine Sättigung geht.

Über das erfindungsgemäße Verfahren ist es nun zuverlässig und reproduzierbar möglich, den $H_2$-Gehalt auf einen Wert > 0,5 x $10^{18}$ Moleküle pro $cm^3$ einzustellen und gleichzeitig eine Sättigung des relativen Wasserstoffverbrauches bei zunehmender Strahlungsdosis sicherzustellen.

Durch die Gewährleistung eines Sättigungsverhaltens des relativen $H_2$-Verbrauches wird zunächst sichergestellt, dass immer $H_2$ zur Absättigung von E' bzw. NBOH-Zentren vorhanden ist, und damit das Quarzglas bei Laserbestrahlung, z.B. mit $\lambda$ = 193 nm und $\lambda$ = 248 nm, nur eine geringe Absorption zeigt.

Ein wichtiger Vorteil wird dadurch erzielt, dass durch das erfindungsgemäße Verfahren die sich einstellende Sättigung von E'- und NBOH-Bildung und der Sättigunng des $H_2$-Gehaltes auch eine Sättigung der strahlungsinduzierten Absorption einstellt.

Experimente haben ergeben, dass eine zunächst neu hergestellte Quarzglasprobe, welche mit einer DUV-Strahlung von $\lambda$= 248 nm beaufschlagt wird, zunächst ein Wasserstoffverbrauchsverhalten zeigt, bei dem der relative Wasserstoffverbrauch quadratisch mit der Energiedichte geht. Ab einer Energiedosis von etwa 2,0 x $10^6$ (MPuls$^*$ $(mJ/cm^2)^2$) ist der relative Wasserstoffverbrauch nahezu konstant.

Wird eine neu hergestellte Quarzglasprobe mit $\lambda$= 193 nm bestrahlt, zeigt sich ein Wasserstoffverbrauchsverhalten, bei dem der relative Wasserstoffverbrauch linear mit der Energiedichte geht.

Es wird bevorzugt, wenn der relative Wasserstoffverbrauch bei 60 % bis 80 % desjenigen Wertes sättigt, welcher bei einer frisch hergestellten Probe vorliegt. In diesem Fall zeigt es sich nämlich, dass die induzierte Absorption des Quarzglases bei zunehmender Pulszahl ebenfalls sättigt und zwar bei sehr niedrigen Absolutwerten. Insofern kann über die Festlegung des Sättigungsniveaus die Stärke der induzierten Absorption des Quarzglases eingestellt werden auf Werte, welche für kommerzielle Anwendungen für Lithographieprozesse relevant sind.

Zur Gewährleistung der optischen Eigenschaften für den Lithographieeinsatz wird bevorzugt, wenn

- die Brechzahlhomogenität im Kernbereich < 5 ppm, und bevorzugt < 1 ppm ist,
- die Doppelbrechung im Kernbereich < 1 nm/cm liegt,
- die Reintransmission bei $\lambda$=248 nm besser als 99.85 % pro cm ist, und
- die Reintransmission bei $\lambda$=193 nm besser als 99.50 % pro cm ist.

Ein Quarzglas mit hoher Stabilität bei DUV-Dauerbeschuss sowie hoher Konstanz in der induzierten Absorption im Langzeitverhalten lässt sich herstellen durch ein Verfahren, bei dem auf eine rotierende Fläche eine Brennerflamme gerichtet ist und bei der der Rohstoff $SiCl_4$ unter Anwesenheit von $H_2$ und $O_2$ bei Temperaturen oberhalb 2000° Celsius umgesetzt, $SiO_2$ auf der rotierenden Fläche abgeschieden und sofort glasig aufgeschmolzen wird, bei dem der Flamme 0,92 bis 1,12 kg/h $SiCl_4$ durch die Mitteldüse des Brenners mit einer Geschwindigkeit von 15 m/s bis 21 m/s, durch den die Mitteldüse umschließenden ersten Ringspalt $O_2$ mit einer Geschwindigkeit von 38 m/s bis 54 m/s zugeführt wird und bei dem das Mischungsverhältnis $H_2$ zu $O_2$ zwischen 2,05 und 2,45 beträgt.

Bei diesem Verfahren handelt es sich um die Flammenhydrolyse im Direktverfahren, bei der nur ein Brenner eingesetzt wird, der meist in horizontaler oder vertikaler Brennrichtung brennt. Die Brennerflamme ist auf die Kappe einer Vorform, welche sich um ihre Achse dreht, gerichtet. Die Vorform wird mit der gleichen Geschwindigkeit von der Brennerflamme entfernt wie die Vorform in Richtung des Brenners wächst. Der Abscheidebrenner ist in einer Muffel angeordnet. Der Rohstoff $SiCl_4$ wird im Trägergas $O_2$ zugeführt. Die gebildeten $SiO_2$-Partikel werden sofort nach dem Niederschlag auf die Kappenfläche der Vorform glasig aufgeschmolzen.

Durch diese Vorgehensweise kann sichergestellt werden, dass zum einen der Wasserstoffgehalt im Quarzglas mindestens 0,5 x $10^{18}$ Moleküle pro $cm^3$ beträgt, zum anderen der relative Wasserstoffverbrauch mit zunehmender Energiedosis in eine Sättigung geht, und insbesondere die induzierte Absorption ebenfalls ein Sättigungsverhalten zeigt. Es soll betont werden, dass die Einstellung des genannten Wasserstoffgehaltes dem Zweck dient, das Sättigungsverhalten der induzierten Absorption sicherzustellen.

Der Rohstoff $SiCl_4$ wird im über die zentrale Brennerdüse mit dem Trägergas $O_2$ in einer Menge von 0,92 bis 1,12 kg/h $SiCl_4$ bei einer bevorzugten Strömungsgeschwindigkeit von 15 m/s bis 21 m/s zugeführt. Dies erfolgt dadurch, dass über eine in der Mitte des Brenners angeordnete kreisrunde Düse $SiCl_4$ zugeführt wird. Bei den gegebenen Toleranzen des freien Querschnitts der Mitteldüse bedeutet dies eine mittlere Ausströmgeschwindigkeit von 15 m/s und 21 m/s.

Das Mischungsverhältnis $H_2$ zu $O_2$ in der Brennerflamme sollte bevorzugt zwischen 2,05 und 2,45 liegen.

Um die Mitteldüse ist konzentrisch ein Ringspalt angeordnet aus dem Sauerstoff strömt. Die Spaltbreite dieses ersten Ringspalts sollte zwischen 0,45 und 0,52 mm liegen, was wiederum Ausströmgeschwindigkeiten von 38 m/s bis 54 m/s bedingt.

Es hat sich als günstig erwiesen, wenn die rotierende Fläche eine Energiebeaufschlagung von 0,145 bis 0,175 $kW/cm^2$ erfährt. Hintergrund dieses Vorzuges ist der Umstand, dass sowohl der Brenner, die Brennerflamme und die rotierende Fläche auf der das Quarzglas abgeschieden und sofort als glasige Walze aufgeschmolzen wird, im Abscheidungsprozess innerhalb eines Muffelofens angebracht sind, und ein geeigneter Wärmehaushalt für den Prozess sichergestellt werden muss.

Wird ein höherer Wert als 0,175 kW/cm$^2$ gewählt, so neigt der Prozess zur Ausbildung einer flächenmäßig kleinen glasigen Kappe der Glaswalze und damit zu einer kleinen Vorform, was unwirtschaftlich ist. In diesem Fall wird zwar viel Energie eingestrahlt, gleichzeitig aber auch ein Großteil der vom Brenner eingebrachten Energie von der glasigen Kappe der wachsenden Glaswalze wieder abgestrahlt. Dies kann z. B. vorkommen, wenn ein leistungsfähiger Brenner in einer bezüglich ihrer Innenkontur ungünstig gestalteten Muffel eingesetzt wird.

Wird hingegen ein Wert von kleiner 0,145 kW/cm$^2$ gewählt, so erzielt man zwar tendenziell in Folge der geringen Wärmeverluste durch Abstrahlung eine flächenmäßig sehr große glasige Kappe. Diese energiesparende Konfiguration ist jedoch prozesstechnisch mit Risiken beladen. Die Kappe kann sich in diesem Fall leicht unkontrolliert und unbeherrschbar weiter vergrößern, was zu einem Abbruch des Schmelzprozesses führt. Selbst wenn dieser Extremfall nicht eintritt und der Prozess gerade noch stabil gehalten werden kann, sind Kappenumströmungen oft gestört und in einen vergrößerten Randbereich der Walze werden Strukturdefekte eingebaut. In den genannten Fällen ist häufig auch die Temperaturverteilung über die Walzenkappe ungünstig, was die Brechzahlhomogenitätsverteilung und die Spannungsdoppelbrechungsverteilung des herzustellenden Quarzglases negativ beeinflusst.

Nachfolgend soll die Erfindung anhand von Ausführungsbeispielen näher erläutert werden.

Es wurden Walzen mit Prozessparametern innerhalb eines eingeengten Prozessfensters geschmolzen.

Aus dem für Stepperlinsen verwendbaren inneren Teil wurden Proben entnommen. Als verwendbar wurde derjenige Teil der Walze betrachtet, in dem die Spezifikationswerte für die Brechzahlhomogenität von weniger als 5*10$^{-6}$, die Doppelbrechung von weniger als 1 nm/cm, der Reintransmission bei λ=248 nm von besser als 99,85 % pro cm, der Reintransmission bei λ=193 nm von besser als 99,50 % pro cm bei Abwesenheit von Schichtungen erfüllt sind.

Das Quarzglas wurde aus verschiedenen Orten des Vorformlings auf 2 Messplätzen mit einem Litho-Excimerlaser bestrahlt, der eine Wellenlänge von λ$_1$= 248 nm bzw λ$_2$ = 193 nm hatte. Bei der Wellenlänge λ$_1$ wurde eine Repetitionsrate von 2000 Hz eingestellt und bei λ$_2$ von 1000 Hz. Bei Variation der Energiedichten und Schusszahlen von mehr als 1 Milliarde Schuss, wurden intervallweise die induzierte Absorption und auch der Wasserstoffgehalt im unbestrahlten und im bestrahlten Volumen gemessen.

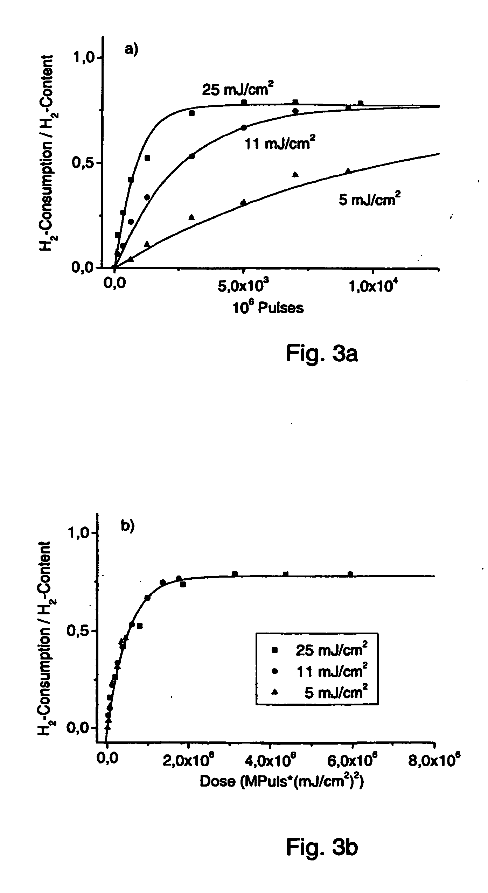

Fig. 3a und 3b zeigen den relativen Wasserstoffverbrauch in Abhängigkeit der Pulszahl (Fig. 3a) bzw. der Energiedosis (Fig. 3b). Der relative Wasserstoffverbrauch ist definiert als Wasserstoffverbrauch dividiert durch den Wasserstoffverbrauch vor der Bestrahlung oder mit anderen Worten der Wasserstoffverbrauch dividiert durch denjenigen Wasserstoffgehalt, den eine frisch hergestellte Quarzglasprobe hatte.

In Fig. 3a erkennt man, dass mit zunehmender Energiedichte der relative Wasserstoffverbrauch in eine Sättigung geht. Bei einer Energiedichte von 25 mJ/cm$^2$ wird der Sättigungswert in gute Nährung bei circa 2 x 10$^9$ Pulsen erreicht. Bei einer niedrigeren Energiedichte wird der Sättigungswert entsprechend langsamer erreicht. Im Anstiegsbereich verläuft der Wasserstoffverbrauch bei einer Bestrahlung mit λ= 248 nm quadratisch mit der Energiedichte. Während die eingezeichneten Symbole in Form von Quadraten, Punkten und Dreiecken Messpunkte darstellen, sind die durchgezogenen Linien Modellrechnungen mit dem weiter oben dargestellten theoretischen Modell. Der Messverlauf kann durch das Modell gut wiedergegeben werden. Die Wasserstoffkonzentration im Glas wird durch Ramanspektroskopie bestimmt. Der prozentuale Wasserstoffverbrauch sättigt bei etwa 80 %. Fig. 3a zeigt weiter, dass der Sättigungswert unabhängig von der Energiedichte, mit der bestrahlt wird eingenommen wird, wenn auch erst nach unterschiedlicher Pulszahl.

In Fig. 3b ist der relative Wasserstoffverbrauch über der Dosis abgetragen. Diese Dosis ist proportional zum Quadrat der Energiedichte. Die Darstellung des prozentualen Wasserstoffverbrauchs über der Dosis der Strahlung zeigt die Korrelation des prozentualen Wasserstoffverbauchs mit dem Quadrat der Energiedichte F und der Pulszahl N bei λ=248 nm Wellenlänge.

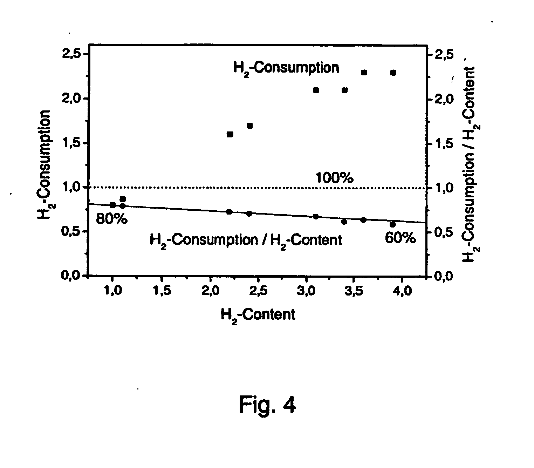

In Fig. 4 ist der absolute und der relative Wasserstoffverbrauch in Abhängigkeit des Wasserstoffgehaltes des Materials dargestellt. Die quadratischen Symbole zeigen den Wasserstoffverbrauch (linke vertikale Achse) abgetragen gegenüber dem Wasserstoffgehalt (Abszisse). Beide Größen sind in Einheiten von 10$^{18}$ Mol/cm$^3$ abgetragen. Man erkennt, dass mit wachsendem Wasserstoffgehalt der Wasserstoffverbrauch stark ansteigt. Die runden Messpunkte stellen den relativen Wasserstoffverbrauch (rechte vertikale Achse) abgetragen gegenüber dem Anfangs-Wasserstoffgehalt (Abszisse) dar. Beide Größen sind in Einheiten von 10$^{18}$ Mol/cm$^3$ abgetragen. Man erkennt, dass der relative Wasserstoffverbrauch für die verschiedenen anfänglichen Wasserstoffgehalte der vermessenen Proben eine nur sehr geringe Abhängigkeit zeigt. Auch bei den sehr unterschiedlichen Wasserstoffgehalten der Messproben von circa 1 x 10$^{18}$ Mol/cm$^3$ bis knapp 4,0 x 10$^{18}$ Mol/cm$^3$ stellt sich die gewünschte Sättigung des relativen Wasserstoffverbrauches ein mit Sättigungswerten zwischen 80 % und 60 %, d. h. bei einem Wasserstoffgehalt von anfangs 1,0 x 10$^{18}$ Mol/cm$^3$ lagen nach der Bestrahlung noch 20 % dieses Wasserstoffgehaltes vor, wohingegen bei einem Anfangsgehalt von circa 4,0 x 10$^{18}$ Mol/cm$^3$ nach der Bestrahlung noch etwa 40 % im Glas verblieben. Dieses Verhalten wird erklärt durch die Einstellung eines Gleichgewichtes bei der Bildung und Rückbildung von wasserstoffangereichertem SiOH. Physikalisch bedeutet dies, dass nach Erreichen des Sättigungswertes für den Wasserstoffverbrauch der Wasserstoff in Konzentrationen zwischen $0,15 \times 10^{18}$ Mol/cm$^3$ (Verbrauch von 80 % von $0,8 \times 10^{18}$ Mol/cm$^3$) und $1,6 \times 10^{18}$ Mol/cm$^3$ (Verbrauch von 60 % von $4,0 \times 10^{18}$ Mol/cm$^3$) verbleiben und für die Absättigung absorbierender Effekte zur Verfügung stehen.

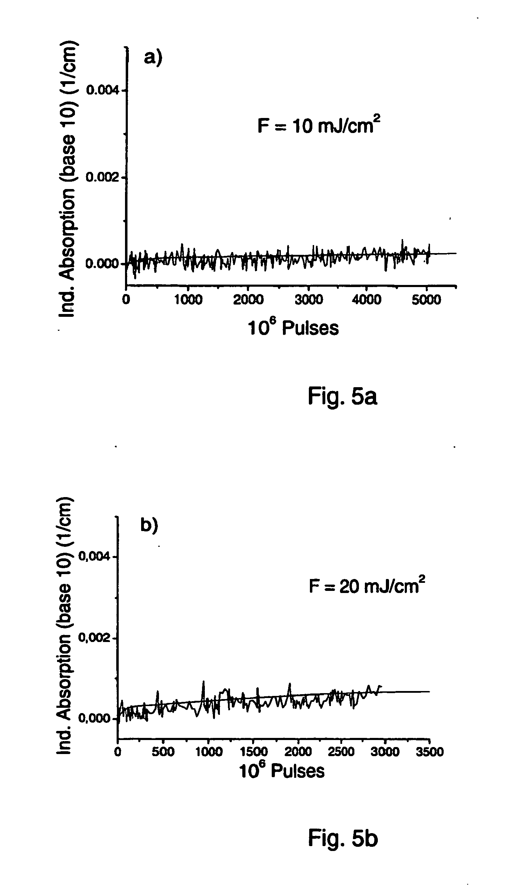

Fig. 5a und 5b zeigen den Verlauf der induzierten Absorption, abgetragen gegenüber der Pulszahl für zwei verschiedene Energiedichten, nämlich für eine Energiedichte von F = 10 mJ/cm$^2$ bei Fig. 4a sowie von F = 20 mJ/cm$^2$ bei Fig. 4b bei einer Bestrahlung mit $\lambda$= 248 nm. Die durchgezogene glatte, beim Ordinatenwert Null beginnende Linie ist eine Modellrechnung zur induzierten Absorption bei Laserstrahlung, in die die Bildung absorbierender Defekte als auch der Wasserstoffverbrauch durch die SiOH-Umbildung eingeht. Die nach dem Modell berechnete Defektbildungskurve der Absorption beschreibt sehr gut die Messwerte und zeigt infolge des Verbleibens einer hohen Wasserstoffkonzentration im Glas eine sehr geringe Absorption auch nach Langzeitbestrahlung. Der letztgenannte Aspekt stellt insbesondere sicher, dass während der Lebensdauer des Quarzglases die gesamte Absorption, welche sich aus der Anfangsabsorption zuzüglich der induzierten Absorption ergibt, in einem für Stepperanwendungen akzeptablen Fenster ist. Die sehr geringen Werte der induzierten Absorption liegen dann vor, wenn nach Erreichen der Sättigung des relativen Wasserstoffverbrauchs noch recht viel Wasserstoff absolut vorhanden ist.

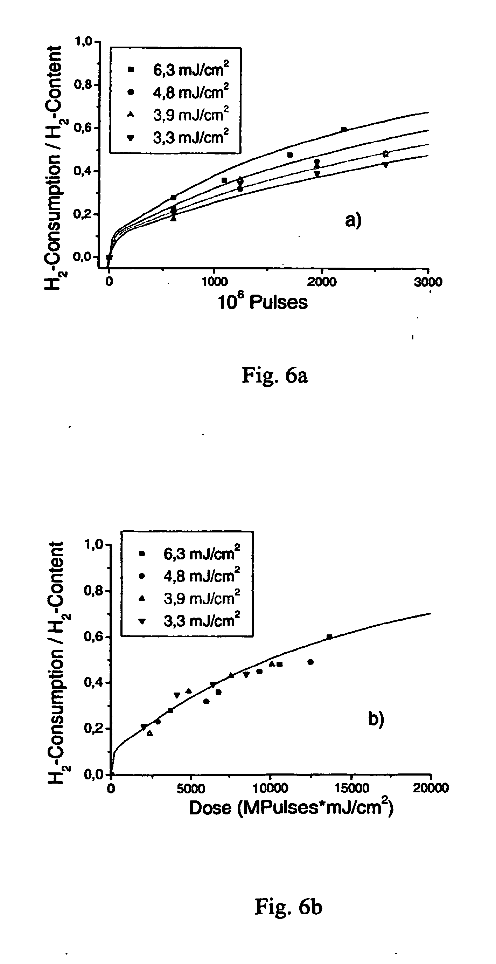

In Fig. 6a ist für den Fall einer Laserbestrahlung mit $\lambda$= 193 nm bei verschiedenen Energiedichten der relative Wasserstoffverbrauch in Abhängigkeit von der Pulszahl abgetragen. Nach einem Verbrauch von ca. $1 \times 10^{17}$ Molekülen pro cm$^3$ H$_2$ mit großer Zeitkonstante erkennt man einen weiteren Verbrauch von H$_2$, der linear von der Energiedichte abhängt. Diese lineare Abhängigkeit wird durch die Auftragung über die Energiedosis verdeutlicht, siehe Fig. 6b. Die Energiedosis ist proportional zur Energiedichte.

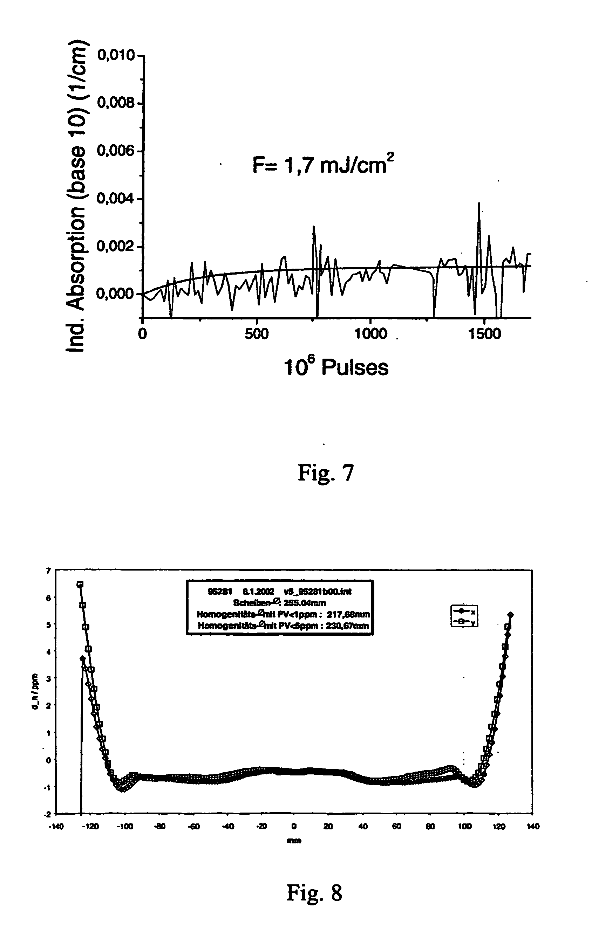

Die Fig. 7 zeigt die aus den Transmissionsdaten berechnete induzierte Absorption welche gegen die Pulszahl abgetragen ist. Die berechneten Modellkurven sind eingezeichnet. Die Absorption ist infolge des hohen verbleibenden H2-Gehaltes sehr gering.

In Fig. 8 ist die Brechzahl d_n in der Einheit "ppm" gegen den Ort abgetragen, an dem diese bestimmt wurde. Der Ort 0 mm entspricht hierbei dem Zentrum der zylindrischen Vorform, so dass wegen der Symmetrie der Vorform Werte für positive und negative x-Werte dieses Ortes abgetragen sind.

Der Bereich der Vorform, innerhalb der die Brechzahl d_n einen Wert kleiner 1 ppm zeigt, ist 217, 68 mm, d.h. innerhalb eines Durchmessers von ca. 218 mm ist die Brechzahl kleiner als 1 ppm. Der entsprechende Durchmesser für einen Wert von d_n < 5 ppm ist 230,67 mm. Wird die Menge an SiCl$_4$ unter den Wert von 0.92 kg/h abgesenkt, so wird der Homogenitätsbereich deutlich kleiner, d.h. die Brechzahl ist innerhalb eines deutlich geringeren Durchmessers kleiner als 1 ppm bzw. 5 ppm. Weiterhin wird die Kurve in diesem Fall parabelförmig.

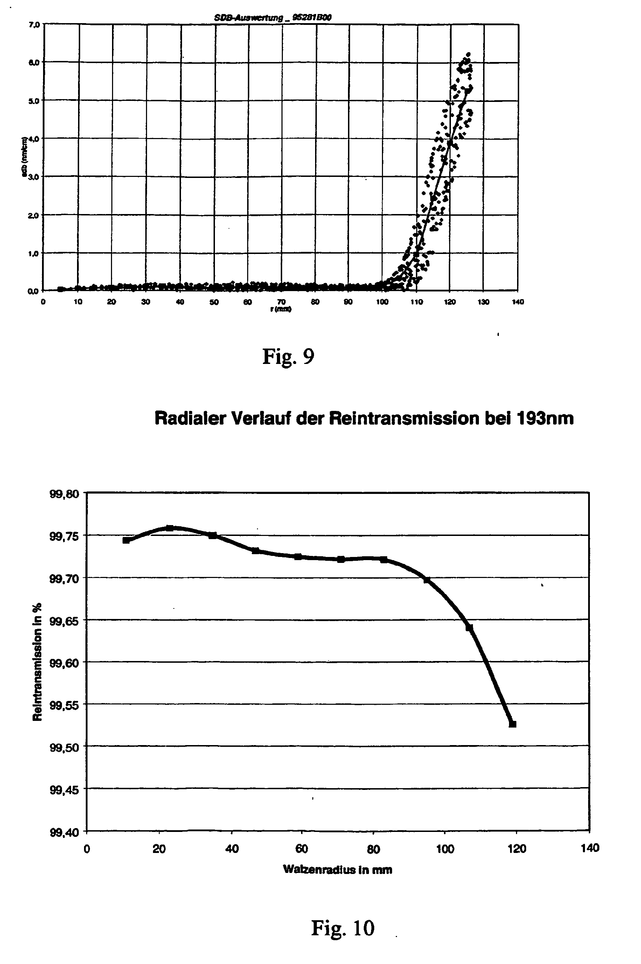

Fig. 9 zeigt den Verlauf der Spannungsdoppelbrechung "sdb" gegen den Ort r, welcher von der Mitte der Walze berechnet wird. Mit dem erfindungsgemäßen Verfahren konnte zuverlässig eine Spannungsdoppelbrechung kleiner 1 nm/cm für Walzenradien bis 110 mm sichergestellt werden.

Fig. 10 zeigt den Verlauf der Reintransmission (Anfangstransmission) in Abhängigkeit des Walzenradius der Vorform. Mit dem erfindungsgemäßen Verfahren konnte die Spezifikation einer Reintransmission für $\lambda$= 193 nm von besser als 99,50 % innerhalb eines Radius bis 120 mm zuverlässig eingehalten werden.

Fig. 11 zeigt den Verlauf der Brechzahlhomogenität, und Fig. 12 den Verlauf der Spannungsdoppelbrechung, jeweils für für Werte der O$_2$-Strömungsgeschwindigkeit die größer als 54 m/s sind, und in Fig. 11 konkret 60 m/s. Man erkennt, dass das Homogenitätsgebiet nun deutlich kleiner ausfällt, und insofern diese Prozessparameter ungeeignet sind das Glas für Linsenblanks einzusetzen. Bereits für Radien größer als 35 mm werden die zulässigen Werte für die Spannungsdoppelbrechung und die Brechzahlhomogenität überschritten.

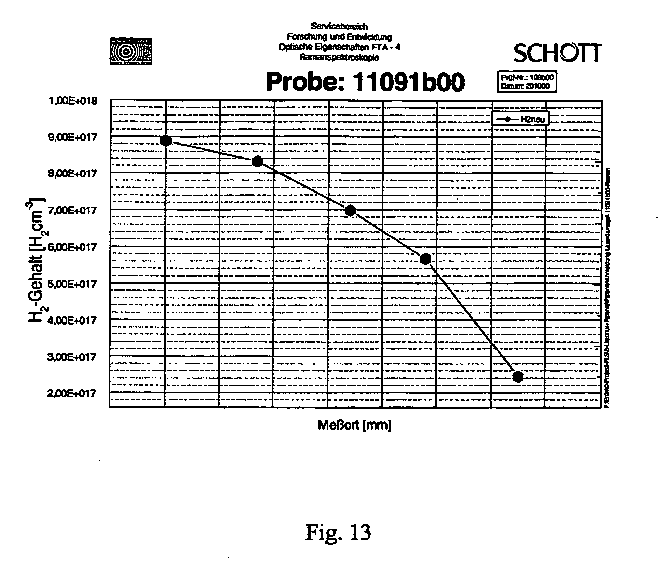

Fig. 13 zeigt einen Fall bei dem das Mischungsverhältnis H$_2$ zu O$_2$ zu gering eingestellt ist, nämlich 1,95. Der Wasserstoffgehalt ist hierbei im Zentrum zu niedrig, und in den Randbereichen der Vorform kann wegen des starken Abfalls des Wasserstoffgehalts der noch erforderliche Wert von mindestens $0,5 \times 10^{18}$ Moleküle/cm$^3$ nur sehr schwer gewährleistet werden.

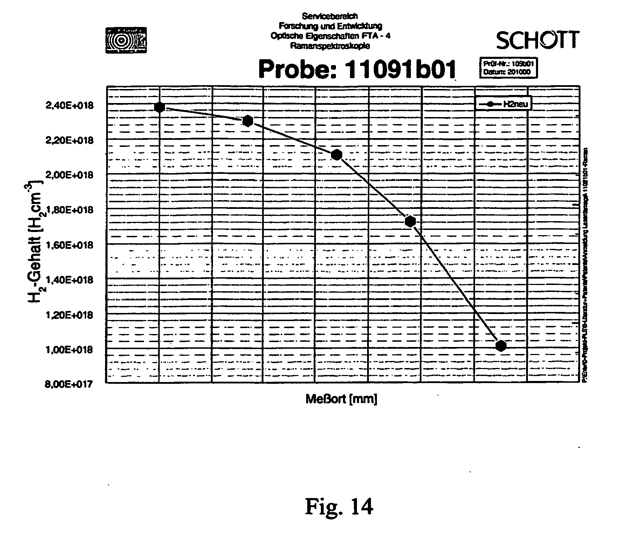

Fig. 14 zeigt den zu Fig. 13 umgekehrten Fall, bei dem das Mischungsverhältnis H$_2$ zu O$_2$ zu hoch eingestellt ist, nämlich auf 2,8. Der Wasserstoffgehalt ist im Zentrum zu hoch und fällt stark parabelförmig ab. Die Doppelbrechung wird dadurch negativ beeinflusst.

**Patentansprüche**

1.   Verfahren zur Herstellung einer Vorform aus Quarzglas, bei dem auf eine rotierende Fläche eine Brennerflamme gerichtet ist, und der Rohstoff SiCl$_4$ unter Anwesenheit von H$_2$ und O$_2$ bei Temperaturen oberhalb 2000° Celsius zu SiO$_2$ umgesetzt, auf der rotierenden Fläche abgeschieden und sofort glasig aufgeschmolzen wird, **dadurch gekennzeichnet, dass** der Flamme durch die zentrale Mitteldüse 0,92 bis 1,12 kg/h SiCl$_4$ bei einer Strömungsgeschwindigkeit von 15 m/s bis 21 m/s zugeführt wird, dass durch den die Mitteldüse umschließenden ersten Ringspalt O$_2$ mit einer Geschwindigkeit von 38 m/s bis 54 m/s zugeführt wird und dass das Mischungsverhältnis H$_2$ zu O$_2$ zwischen 2,05 bis 2,45 ist.

2.   Verfahren nach Anspruch 1, **dadurch gekenn-**

**zeichnet, dass** eine Energiebeaufschlagung pro Fläche der glasig klaren Vorformkappe von 0,145 kW/cm$^2$ bis 0,175 kW/cm$^2$ erfolgt.

3. Verfahren zu Herstellung eines optischen Elements aus Quarzglas für Laseranwendungen mit den Schritten

   - Herstellen einer Vorform aus Quarzglas, wobei auf eine rotierende Fläche eine Brennerflamme gerichtet ist, der Rohstoff SiCl$_4$ unter Anwesenheit von H$_2$ und O$_2$ bei Temperaturen oberhalb 2000° Celsius zu SiO$_2$ umgesetzt, auf der rotierenden Fläche abgeschieden und sofort glasig aufgeschmolzen wird, und wobei der Flamme durch die zentrale Mitteldüse 0,92 bis 1,12 kg/h SiCl$_4$ bei einer Strömungsgeschwindigkeit von 15 m/s bis 21 m/s zugeführt wird, und durch den die Mitteldüse umschließenden ersten Ringspalt O$_2$ mit einer Geschwindigkeit von 38 m/s bis 54 m/s zugeführt wird und wobei das Mischungsverhältnis H$_2$ zu O$_2$ zwischen 2,05 bis 2,45 ist.
   - Herstellen eines optischen Elements aus dieser Vorform.

4. Verfahren nach Anspruch 3 **dadurch gekennzeichnet, dass** bei der Herstellung der Vorform eine Energiebeaufschlagung pro Fläche der glasig klaren Vorformkappe von 0,145 kW/cm$^2$ bis 0,175 kW/cm$^2$ erfolgt.

**Claims**

1. Process for the production of a preform from quartz glass, in which a burner flame is directed onto a rotating surface and the raw material SiCl$_4$ is converted in the presence of H$_2$ and O$_2$ at temperatures above 2000°C Celsius into SiO$_2$, deposited on the rotating surface and immediately melted with vitrification, **characterized in that** 0.92 to 1.12 kg/h of SiCl$_4$ is fed at a flow rate of 15 m/s to 21 m/s to the flame through the central middle nozzle, **in that** O$_2$ is fed at a rate of 38 m/s to 54 m/s through the first annular gap surrounding the middle nozzle and **in that** the mixing ratio of H$_2$ to O$_2$ is between 2.05 and 2.45.

2. Process according to Claim 1, **characterized in that** an energy of 0.145 kW/cm$^2$ to 0.175 kW/cm$^2$ impinges per area of the glass-clear preform cap.

3. Process for the production of an optical element from quartz glass for laser applications, comprising the steps

   - production of a preform from quartz glass, a burner flame being directed onto a rotating surface, the raw material SiCl$_4$ being converted in the presence of H$_2$ and O$_2$ at temperatures above 2000°C into SiO$_2$, deposited on the rotating surface and immediately being melted with vitrification, and 0.92 to 1.12 kg/h of SiCl$_4$ being fed at a flow rate of 15 m/s to 21 m/s to the flame through the central middle nozzle and O$_2$ being fed at a rate of 38 m/s to 54 m/s through the first annular gap surrounding the middle nozzle, and the mixing ratio of H$_2$ to O$_2$ being between 2.05 and 2.45,
   - production of an optical element from this preform.

4. Process according to Claim 3, **characterized in that**, in the production of the preform, an energy of 0.145 kW/cm$^2$ to 0.175 kW/cm$^2$ impinges per area of the glass-clear preform cap.

**Revendications**

1. Procédé de fabrication d'une ébauche en verre de quartz, dans lequel la flamme d'un brûleur est orientée sur une surface tournante et la matière première SiCl$_4$ est convertie en SiO$_2$ à une température supérieure à 2 000° Celsius en présence de H$_2$ et de O$_2$, le SiO$_2$ se déposant sur la surface rotative où il fond et se vitrifie immédiatement, **caractérisé en ce que** la tuyère médiane centrale apporte à la flamme de 0,92 à 1,12 kg/h de SiCl$_4$ à une vitesse d'écoulement de 15 m/s à 21 m/s, **en ce que** de l'O$_2$ est amené à une vitesse de 38 m/s à 54 m/s par le premier interstice annulaire qui entoure la tuyère médiane et **en ce que** le rapport de mélange entre H$_2$ et O$_2$ est compris entre 2,05 et 2,45.

2. Procédé selon la revendication 1, **caractérisé en ce que** la densité d'énergie apportée par unité de surface du bonnet d'ébauche transparent vitrifié est de 0,145 kW/cm$^2$ à 0,175 kW/cm$^2$.

3. Procédé de fabrication d'un élément optique en verre de quartz pour applications laser, présentant les étapes qui consistent à :

   - fabriquer une ébauche en verre de quartz en orientant sur une surface rotative la flamme d'un brûleur qui convertit la matière première SiCl$_4$ en SiO$_2$ à une température supérieure à 2 000° Celsius en présence de H$_2$ et d'O$_2$, le SiO$_2$ se déposant sur la surface rotative où il fond et se vitrifie immédiatement, de 0,92 à 1,12 kg/h de SiCl$_4$ étant amenés à la flamme par la tuyère médiane centrale à une vitesse de 15 m/s à 21 m/s, de l'O$_2$ étant amené à une vitesse de 38 m/s à 54 m/s par le premier interstice annulaire qui entoure la tuyère médiane et le rapport de mélange entre $H_2$ et $O_2$ étant compris entre 2,05 et 2,45, et

- former un élément optique à partir de cette ébauche.

4. Procédé selon la revendication 3, **caractérisé en ce que** lors de la fabrication de l'ébauche, la densité d'énergie apportée par unité de surface du bonnet d'ébauche transparent vitrifié est de 0,145 $kW/cm^2$ à 0,175 $kW/cm^2$.

Fig. 1

Fig. 2

Fig. 3a

Fig. 3b

**Fig. 4**

a)

F = 10 mJ/cm²

Fig. 5a

b)

F = 20 mJ/cm²

Fig. 5b

Fig. 6a

Fig. 6b

Fig. 7

Fig. 8

Fig. 9

**Radialer Verlauf der Reintransmission bei 193nm**

Fig. 10

30051  09.11.01  v5_30051b00.int  177.60mm
PV: 35,98ppm  RMS: 11,4  5ppm: 67  1ppm: 25

Fig. 11

Fig. 12

Fig. 13

Serviceberaich
Forschung und Entwicklung
Optische Elgenschaften FTA - 4
Ramanspektroskopie

**SCHOTT**

## Probe: 11091b01

Prüf-Nr.: 109b01
Datum: 201000

Fig. 14

**IN DER BESCHREIBUNG AUFGEFÜHRTE DOKUMENTE**

**In der Beschreibung aufgeführte Patentdokumente**

- DE 4203287 A1
- EP 0964832 B1
- EP 0735006 A1
- EP 0720970 A1
- EP 0835848 A2